# EUROPÄISCHE PATENTSCHRIFT

(11) **EP 0 895 371 B1**
(45) Veröffentlichungstag und Bekanntmachung des Hinweises auf die Patenterteilung: **13.08.2008**
(21) Anmeldenummer: 98111347.5
(22) Anmeldetag: 19.06.1998
(51) Int. Cl.: H04J 3/12, H04J 3/14, H04J 3/06, H04Q 11/04

(54) **Zeitmultiplexorientierte Schnittstelle zwischen zentralen und dezentralen Komponenten von Kommunikationsanordnungen**
Time multiplexed oriented interface between a central and decentral components of communication devices
Interface à multiplexage dans le temps entre un dispositif central et des dispositifs décentraux

(30) Priorität: 31.07.1997 DE 19733164
(43) Veröffentlichungstag der Anmeldung: 03.02.1999
(73) Patentinhaber: Nokia Siemens Networks GmbH & Co. KG, 81541 München (DE)
(72) Erfinder: Zuck, Josef-Peter, 81825 München (DE)

(56) Entgegenhaltungen:
- EP-A- 0 488 610
- WO-A-96/16503
- US-A- 4 144 407
- US-A- 4 736 120
- US-A- 5 345 438

## Beschreibung

In zeitmultiplexorientierten Kommunikationseinrichtungen, beispielsweise in Einrichtungen von Zubringernetzen oder in Kommunikationssystemen, sind zwischen deren zentralen und dezentralen Komponenten zeitmultiplexorientierte Kommunikations-Schnittstellen realisiert. Eine bekannte zeitmultiplexorientierte Schnittstelle stellt beispielsweise die PCM 30 - Schnittstelle dar, die zwischen dem Koppelfeld und den peripheren Teilnehmeranschlußeinrichtungen eines Kommunikationssystems angeordnet ist. Die PCM 30 - Schnittstelle weist 30 x 64 kbit/s Übertragungskanäle sowie einen Signalisierungskanal auf, wobei in dem Signalisierungskanal die vermittlungstechnischen Informationen für die 30 gemultiplexten Übertragungskanäle übermittelt werden. Eine weitere zeitmultiplexorientierte Schnittstelle stellt die aus der Druckschrift 'ISDN im Büro, Hicom', Siemens AG, 1986, S.58 bis 66 bekannte PCM-Highway-Schnittstelle dar, die durch 4 x 32 PCM-Übertragungskanäle gebildet ist. Signalisierungskanäle werden nicht über den PCM-Highway sondern separat über die vermittlungstechnischen Einrichtungen der Kommunikationssysteme geführt.

Aus WO 96/16503 A1 ist ein drahtloses Kommunikationssystem bekannt, bei dem zwei Teilnehmer über Funkschnittstellen miteinander kommunizieren. Die Kommunikation kann über ein zentrales Netzwerk oder direkt mittels einer sog. "Walkie-Talkie"-Option stattfinden.

EP 0 488 610 A2 behandelt ein Backup-System für eine Kommunikationsverbindung. Bei Ausfall der Hauptverbindung zwischen zwei Teilnehmern wird auf den Backup-Kanal, eine ISDN-Verbindung, umgeschaltet.

Die der Erfindung zugrundeliegende Aufgabe ist darin zu sehen, eine universell einsetzbare Schnittstelle zwischen zentralen und dezentralen Komponenten von Kommunikationseinrichtungen auszugestalten. Die Aufgabe wird durch die Merkmale des Anspruchs 1 gelöst.

Der wesentliche Aspekt der erfindungsgemäßen zeitmultiplexorientierten Schnittstelle ist darin zu sehen, daß mehrere in Übertragungsrahmen angeordnete Zeitschlitze zur seriellen Übermittlung von Nutzinformationen, vermittlungstechnischen Informationen, sicherheits- und betriebstechnischen Informationen, Programmen im Sinne eines Ladens von Komponenten der Kommunikationseinrichtung und von Rahmentakt- und/oder Überrahmentaktinformationen vorgesehen sind. Ein Vorteil der erfindungsgemäßen zeitmultiplexorientierten Schnittstelle ist darin zu sehen, daß keine zusätzlichen Verbindungen zwischen den zentralen und dezentralen Komponenten von Kommunikationseinrichtungen für einen Kommunikationsaustausch erforderlich sind. Dies bedeutet, daß eine weitgehend unabhängige Entwicklung von zentralen und dezentralen Komponenten von Kommunikationseinrichtungen - beispielsweise zentralen Koppelfeldern und peripheren Anschlußbaugruppen von Kommunikationssystemen - möglich ist, wobei die Anschlüsse zwischen den Komponenten auf ein Minimum reduziert sind. Ein weiterer Vorteil der erfindungsgemäßen, zeitmultiplexorientierten Schnittstelle ist darin zu sehen, daß die einzelnen Informationen, wie beispielsweise sicherheits-, betriebs- und vermittlungstechnische Informationen in getrennten Zeitschlitzen übermittelt werden und somit ein gleichzeitiges, ungestörtes Übermitteln von Informationen zwischen den Komponenten ermöglicht wird.

Vorteilhaft ist ein Zeitschlitz durch Datenbits, zumindest ein Signalisierungsbit und zumindest ein Paritybit gebildet - Anspruch 2. Mit Hilfe des zumindest einen zusätzlichen Signalisierungsbit können neben den eigentlichen Datenbits - beispielsweise digitalisierte Sprachinformationen - zusätzlich kanalorientierte Signalisierungsinformationen - d.h. Signalisierungsinformationen zu der jeweiligen Verbindung - gleichzeitig bzw. zusätzlich übertragen werden. Das Signalisierungsbit ist bei zentralen Signalsierungskonzepten für die Übertragungskanäle - beispielsweise ein zentraler Signalsierungskanal bei der V.5-Schnittstelle - nicht erforderlich, d.h. das Signalisierungsbit wird bei Bedarf verwendet. Das zumindest eine Paritybit erhöht die Sicherheit der Datenübertragung. Im Sinne einer prozessorgerechten Verarbeitung sind vorteilhaft acht Datenbits, ein Signalisierungsbit und ein Paritybit je Zeitschlitz vorgesehen - Anspruch 3.

Gemäß einer Weiterbildung des erfindungsgemäßen Verfahrens werden die in den Datenbits zu übermittelnden Nutzinformationen NZR-codiert und ungerade Paritybits gebildet und aus den empfangenen Nutzinformationen und Paritybits wird der Bittakt für die bitgemäße Verarbeitung der empfangenen Informationen abgeleitet - Anspruch 4. Durch die NZR-Codierung und die Verwendung eines ungeraden Paritybits wird erreicht, daß in jedem übertragenen Zeitschlitz ein Flankenwechsel des empfangenen Datensignals erzeugt wird. Mit dem zumindest einen Flankenwechsel kann empfangsseitig ein Phasenregelkreis synchronisiert werden, indem den Bittakt anzeigende Taktsignale erzeugt werden. Diese Taktsignale werden als Systemtaktsignale an die nachfolgenden Einheiten bzw. Komponenten der jeweiligen Kommunikationseinrichtung für die bitgemäße Verarbeitung der empfangenen Informationen weitergeleitet.

Für Kommunikationseinrichtungen in einem Zubringernetz eines Kommunikationssystems weist die zeitmultiplexorientierte Schnittstelle vorteilhaft einen Zeitschlitz für die Übermittlung von vermittlungstechnischen Informationen, zwei Zeitschlitze für die Übermittlung von sicherheits- und betriebstechnischen Informationen, vier Zeitschlitze für das Laden von Programmen, 154 Zeitschlitze für die Übermittlung von zeitmultiplexorientierten Nutzinformationen und einen Zeitschlitz für die Übermittlung von Rahmentakt- und/oder Überrahmentaktinformationen auf - Anspruch 5. Hierbei ist besonders vorteilhaft die jeweilige Übertragungskapazität, d.h. die Anzahl der Zeitschlitze auf die erforderlichen Übertragungskapazitäten bezüglich der einzelnen Informationsgruppen abgestimmt.

Die zeitmultiplexorientierte Schnittstelle ist physikalisch vorteilhaft bidirektional mit jeweils symmetrischer 2-Draht-Informationsübertragung realisiert - Anspruch 6. Vorteilhaft können hierbei Leitungstreiber und Empfänger in bekannter 3.3 V- oder 5 V-Technologie eingesetzt werden.

Gemäß einer weiteren vorteilhaften Ausgestaltung der zeitmultiplexorientierten Schnittstelle sind die beiden Zeitschlitze für die Übermittlung von sicherheits- und betriebstechnischen Informationen für redundante Komponenten der Kommunikationseinrichtung vorgesehen - Anspruch 7. Vorteilhaft werden diese beiden Zeitschlitze für die Übermittlung von sicherheits- und betriebstechnischen Informationen in einer Kommunikationsanordnung mit zentralen und dezentralen Komponenten mit jeweils zeitmultiplexorientierten Schnittstellen eingesetzt. Hierbei ist jede dezentrale Komponente bidirektional mit jeder zentralen Komponente über zeitmultiplexorientierte Schnittstellen verbunden, wobei jeder dezentralen Komponente ein Zeitschlitz zur Übermittlung von sicherheits- und betriebstechnischen Informationen zugeordnet ist. In den zentralen und dezentralen Komponenten sind Mittel zum Erkennen des Ausfalls vorgesehen, wobei beim Ausfall von zentralen Komponenten eine den Ausfall anzeigende sicherheitstechnische Information über den zugeordneten Zeitschlitz zur Übermittlung von sicherheits- und betriebstechnischen Informationen an die mit ihr verbundenen dezentralen Komponenten übermittelt wird. In den dezentralen Komponenten sind untereinander verbundene Mittel zum Umschalten auf die jeweils redundante Komponente im Falle eines Ausfalls einer zentralen oder dezentralen Komponente vorgesehen - Anspruch 8. Bei diesem vorteilhaften Ausfallkonzept für redundant angeordnete zentrale und dezentrale Komponenten werden die jeweiligen Komponenten jeweils in Empfangsrichtung aktiv betrieben und eine der beiden Komponenten als aktive Komponente definiert und bei Ausfall einer Komponente wird lediglich durch die entsprechenden Schalter bzw. Umschalter eine aktive Mitwirkung der ausgefallenen Komponente gesperrt bzw. ausgeschlossen. Vorteilhaft erfolgt die Redundanzschaltung der in Übermittlungsrichtung zur dezentralen Komponente wirkenden zeitmultiplexorientierten Schnittstellen durch einen Umschalter und der in Übermittlungsrichtung zur zentralen Komponente wirkenden zeitmultiplexorientierten Schnittstellen mit Hilfe eines Schalters - Anspruch 9.

Im folgenden wird die erfindungsgemäße zeitmultiplexorientierte Schnittstelle bzw. eine erfindungsgemäße Kommunikationsanordnung anhand von vier Blockschaltbildern näher erläutert. Dabei zeigen
- FIG 1: den Aufbau eines Übertragungsrahmens der zeitmultiplexorientierten Schnittstelle,
- FIG 2: den Aufbau eines im Übertragungsrahmen angeordneten Zeitschlitzes,
- FIG 3: den Aufbau einer eine zeitmultiplexorientierte Schnittstelle realisierende Schnittstelleneinheit und
- FIG 4: eine Kommunikationsanordnung mit redundanten zentralen und dezentralen Baugruppen, die über zeitmultiplexorientierte Schnittstellen verbunden sind.

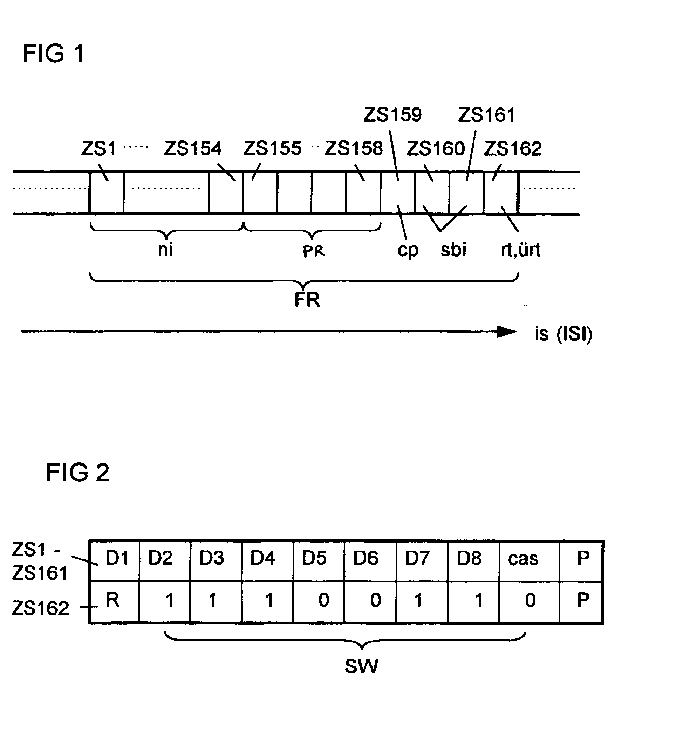

FIG 1 zeigt einen kontinuierlichen, zeitschlitzorientierten Informationsstrom is, der über eine zeitmultiplexorientierte Schnittstelle ISI - in FIG 1 durch die in Klammern gesetzte Bezeichnung ISI angedeutet - zwischen zentralen und dezentralen Komponenten einer Übertragungseinrichtung übermittelt wird. Bei bidirektionalen zeitmultiplexorientierten Schnittstellen ISI ist in jede der beiden Übertragungsrichtungen ein derartiger Informationsstrom is übermittelbar.

Der kontinuierliche Informationsstrom is ist in gleichartig aufgebaute Übertragungsrahmen FR strukturiert. Jedem Übertragungsrahmen FR sind 162 Zeitschlitze ZS1..ZS162 zugeordnet. Für das Ausführungsbeispiel sei angenommen, daß die Übertragungsrahmen FR mit einer Geschwindigkeit von 8 kHz (125 µs) übermittelt werden. Eine derartige Frequenz ist insbesondere für die Übermittlung von digitalisierten Sprachinformationen mit einer Abtastrate von 8 kHz geeignet. Im Übertragungsrahmen FR sind die ersten 154 Zeitschlitze ZS1..ZS154 für die Übermittlung von Nutzinformationen ni - beispielsweise digitalisierten Sprachinformationen oder sonstige Daten - vorgesehen.

Die vier weiteren Zeitschlitze, nämlich der 155. bis 158. Zeitschlitz ZS155..ZS158 sind für das Laden von Programmen PR vorgesehen. In diesen Zeitschlitzen ZS155..ZS158 werden beispielsweise von einer zentralen Komponente - beispielsweise einem Mikroprozessorsystem mit Programmspeicher - die jeweiligen Applikationsprogramme PR an die dezentralen bzw. peripheren Komponenten - beispielsweise eine Leitungsanschlußbaugruppe eines Kommunikationssystems - bei den Inbetriebnahmen der peripheren bzw. dezentralen Komponenten bzw. Baugruppen geladen. Dieses Laden von Programmen PR kann auch während des Betriebes der zeitmultiplexorientierten Schnittstelle ISI erfolgen, um beispielsweise ein aktualisiertes Applikationsprogramm PR in der peripheren bzw. dezentralen Komponente zu speichern und in Betrieb zu nehmen. Der folgende, d.h. 159. Zeitschlitz ZS159 ist für die Übermittlung von vermittlungstechnischen Informationen cp vorgesehen, wobei in diesem Zeitschlitz ZS159 insbesondere die im Rahmen der Signalisierung zwischen einem Kommunikationssystem und einem Kommunikationsendgerät vorgesehenen Signalisierungsinformationen für die Zeitschlitze ZS1..154 für die Übermittlung von Nutzinformationen ni paketweise übertragen werden. Beispielsweise werden hier Signalisierungsinformationen bzw. vermittlungstechnische Informationen cp für analoge oder digitale Kommunikationsendgeräte übermittelt.

In den folgenden beiden, d.h. im 160. und 161. Zeitschlitz ZS160,ZS161 werden sicherheits- und betriebstechnische Informationen sbi übermittelt. Es wurden zwei Zeitschlitze ZS160, ZS161 gewählt, um bei redundanten dezentralen Komponenten jeweils einen Zeitschlitz ZS159,ZS160 der redundant angeordneten dezentralen Komponente bzw. Baugruppe zuzuordnen. Sicherheits- und betriebstechnische Informationen sbi stellen insbesondere betriebstechnische Anweisungen für den Betrieb, die Administration und die Wartung der jeweiligen zentralen oder dezentralen Komponenten dar. Zusätzlich werden für die Ersatzschaltung beim Ausfall von zentralen oder dezentralen Komponenten entsprechende Fehler- oder Betriebszustandsmeldungen über die beiden Zeitschlitze ZS160,ZS161 übermittelt.

Im letzten Zeitschlitz, d.h. im 162. Zeitschlitz ZS162 werden die Rahmentakt- und bei Bedarf die (Überrahmentaktinformationen rt, ürt übermittelt. Bezogen auf das Ausführungsbeispiel werden als Rahmentaktinformation spezielle Bitmuster, sogenannte Rahmensynchronisierungs-Bitmuster bzw. Synchronwörter übertragen. Mit Hilfe dieser Synchronisierungs-Bitmuster wird in der einen Informationsstrom is empfangenden Komponente der Rahmentakt in bekannter Weise ermittelt. Mit Hilfe dieses Rahmentakts wird der Beginn bzw. das Ende eines Übertragungsrahmens FR festgestellt und anschließend werden die einzelnen Zeitschlitze ZS1..ZS162 abgetastet und entsprechend weiterverarbeitet. Desweiteren ist in dem letzten Zeitschlitz ZS162 bedarfsweise ein Bit für die Anzeige eines Überrahmentaktsignals ürt definiert. Dies bedeutet, daß bei gesetzten Bit der in diesem Übertragungsrahmen FR angegebene Rahmentaktsignal rt gleichzeitig das Überrahmentaktsignal ürt repräsentiert.

FIG 2 zeigt den prinzipiellen Aufbau der in einen Übertragungsrahmen FR eingefügten Zeitschlitze ZS1..162. Ein Zeitschlitz ZS umfaßt generell 10 Bit, wobei 8 Bits D1..8 für die Übermittlung von Nutzinformationen ni, ein Bit für die Übermittlung von zusätzlichen Informationen cas und ein Paritybit P vorgesehen sind. Die Anzahl der 8 Bits D1..8 ist auf eine Übertragung von digitalisierten Sprachinformationen mit einer Breite von 8 Bit, d.h. auf PCM-Übertragung von Sprachinformationen abgestimmt. In dem Bit für die Übermittlung von zusätzlichen Informationen cas werden beispielsweise den Nutzbits ni zugeordnete Signalisierungsinformationen cas übermittelt. Als Signalisierungsinformationen cas werden hierbei dem jeweiligen Sprachkanal - durch die 8 Nutzbits D1..8 bestimmt - zugeordnete Signalisierungsinformationen - in der Fachwelt als chanel associated signalling bezeichnet - übermittelt. Das Bit für die Übermittlung von zusätzlichen Informationen cas kann bedarfweise benutzt werden, d.h. bei Verwendung von zentralen Signalisierungskonzepten bzw. Signalisierungskanälen bleibt dieses Bit beispielsweise ungenutzt oder wird für die Übermittlung von weiteren Übertragungskanal-spezifischen Informationen verwendet.

In FIG 2 ist zusätzlich der Aufbau des 162. Zeitschlitzes ZS162 dargestellt. In diesem Zeitschlitz ZS162 ist das erste Bit R für die Kennzeichnung eines Überrahmens reserviert. Anschließend folgen 8 Bit, in denen das Rahmen-Synchronisierwort eingetragen ist - in FIG 2 ist beispielhaft ein Synchronisierwort 11100110 eingetragen. Für die sichere Übertragung der Rahmen-Synchronisierworte SW und des ersten Bit R für die Kennzeichnung eines Überrahmens ist als 10.Bit ebenfalls ein Paritybit P vorgesehen.

Bei dem in FIG 2 aufgezeigten Aufbau der Zeitschlitze ZS1. ZS162 und dem in FIG 1 dargestellten Aufbau eines Übertragungsrahmens FR ergibt sich eine Datenübertragungsgeschwindigkeit von 12,96 Megabit/sec. über die zeitmultiplexorientierte Schnittstelle ISI.

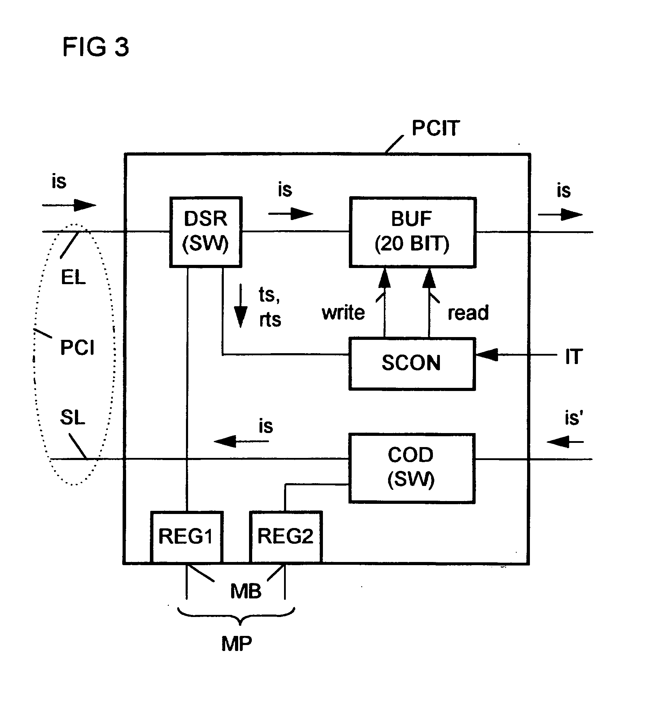

FIG 3 zeigt in einem Blockschaltbild eine Realisierung einer bidirektionalen, multiplexorientierten Schnittstelle ISI in einer Schnittstelleneinheit PCIT. Empfangsleitungen EL der multiplexorientierten Schnittstelle ISI sind auf eine Synchronisierseinheit DSR geführt, in der aus dem empfangenen, seriellen Informationsstrom is das Taktsignal ts und das Rahmentaktsignal rts abgeleitet wird. Das Rahmentaktsignal rts wird durch Erkennen und Dekodieren des Rahmen-Synchronisierwortes SW, das in den 162. Zeitschlitz ts eingefügt ist, wiedergewonnen. Die Wiedergewinnung des Taktsignals wird durch die NZR-Codierung und die Verwendung eines ungeraden Paritybits der Nutzinformationen ni erreicht, wodurch in jedem übertragenen Zeitschlitz ein Flankenwechsel des empfangenen Datensignals erzeugt wird. Mit dem zumindest einen Flankenwechsel kann empfangsseitig ein Phasenregelkreis synchronisiert werden, in dem den Bittakt anzeigende Taktsignale ts erzeugt werden. Diese Taktsignale ts werden als Systemtaktsignale an die nachfolgenden Einheiten bzw. Komponenten der jeweiligen Kommunikationseinrichtung für die bitgemäße Verarbeitung der empfangenen Informationen weitergeleitet.

Der empfangene serielle Informationsstrom is wird anschließend in 20 Bit breite elastischen Zwischenspeicher BUF kontinuierlich eingeschrieben. Das Einschreibesignal write wird in einer Synchronisiereinheit SCON aus dem übermittelten Taktsignal ts bzw. Rahmentaktsignal rt abgeleitet. Aus dem elastischen Zwischenspeicher BUF wird der Informationsstrom is bitweise mit Hilfe eines in der Synchronisiereinheit SCON gebildeten Auslesesignals read bitweise ausgelesen und als Informationsstrom is an weiterführende, nicht dargestellte Komponenten bzw. Einheiten weitergeleitet. Zur systemtaktgerechten Auslesung bzw. für das Bilden des Auslesesignals read wird der Synchronisiereinheit SCON der Takt IT zugeführt. Ein über die multiplexorientierte Schnittstelle PCI auszusendender Informationsstrom is' wird in der Schnittstelleneinheit PCIT einer Codiereinheit COD zugeführt, in der das Synchronisierwort SW in den 162. Zeitschlitz ZS162 eingefügt wird. Desweiteren werden die Übertragungsrahmen FR gemäß einem internen zugeführten Sendetakt an die Sendeleitung SL übermittelt. Die in der Synchronisiereinheit DSR und der Codiereinheit COD verwendeten Synchronisierwörter SW können über mit diesen Einheiten DSR,COD verbundene erste und zweite Register REG1, REG2 vorgegeben werden. Die beiden Register REG1,REG2 sind über einen nicht dargestellten Mikroprozessorbus MB mit einem Mikroprozessor MP verbunden. Von diesem können die jeweiligen Synchronisierwörter SW in die Register REG1,REG2 geladen werden.

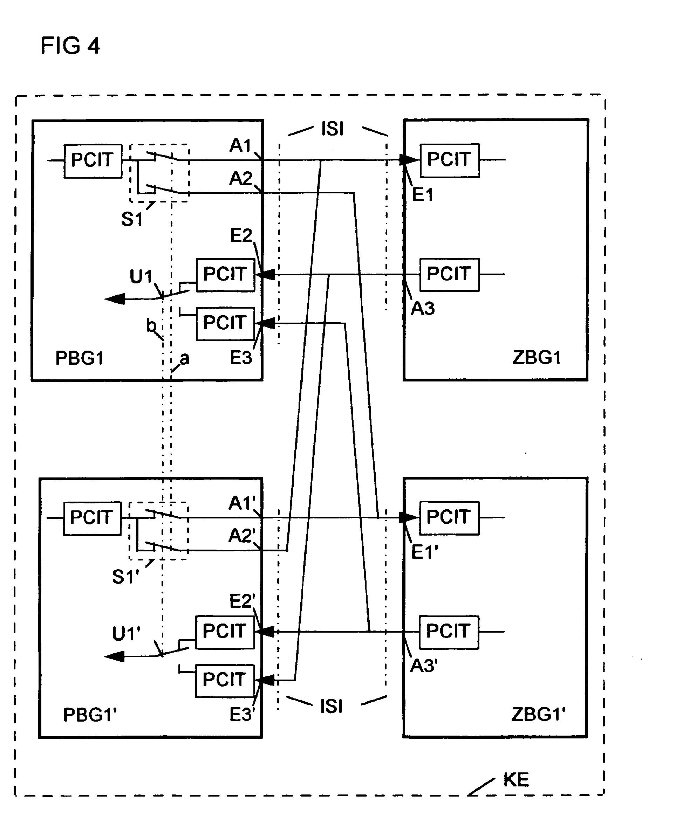

FIG 4 zeigt in einem Blockschaltbild zwei zentrale Komponenten bzw. zentrale Baugruppen ZBG1,ZBG1', an die beispielhaft zwei periphere Komponenten bzw. periphere Baugruppen PBG1, PBG1' angeschlossen sind. Üblicherweise sind mehrere periphere Baugruppen - nicht dargestellt - an beispielsweise zwei redundante zentrale Baugruppen angeschlossen. Die zentralen und peripheren Baugruppen (PBG1,PBG1',ZBG1,ZBG1') sind in einer Kommunikationseinrichtung - durch ein strichliertes Rechteck angedeutet -, beispielsweise einer optischen Netzwerkeinheit angeordnet. Für das Ausführungsbeispiel sei angenommen, daß sowohl für die erste zentrale als auch erste periphere Baugruppe PBG1,ZBG1 jeweils eine periphere bzw. zentrale, zur jeweils ersten redundante Baugruppe ZBG1',PBG1' vorgesehen ist. Desweiteren ist für das Ausführungsbeispiel angenommen, daß alle Anschlüsse zwischen den zentralen und dezentralen Baugruppen PBG1,PBG1',ZBG1,ZBG1' als multiplexorientierte Schnittstellen ISI realisiert sind - in FIG 4 durch eine strichpunktierte Linie mit der Bezeichnung ISI angedeutet. In den zentralen und dezentralen Baugruppen PBG1,PBG1', ZBG1,ZBG1' sind die zeitmultiplexorientierten Schnittstellen ISI jeweils durch ein Schnittstellenmodul PCIT - wie in FIG 3 beschrieben - realisiert.

Für eine Erläuterung sind die in Übermittlungsrichtung von der jeweiligen Baugruppe BG abgehenden Leitungen der jeweiligen Schnittstelle ISI mit A.. und die ankommenden Leitungen der jeweiligen Schnittstelle ISI mit E.. bezeichnet. Hierbei ist eine erste und zweite abgehende Leitung A1,A2 mit einem ersten Eingang E1 der zentralen Baugruppe ZBG1 und einem ersten Eingang E1' mit der redundanten zentralen Baugruppe ZBG1' verbunden. Ein zweiter Eingang E2,E2' der peripheren und redundanten peripheren Baugruppe PBG1,PBG1' ist jeweils mit einem dritten Ausgang A3, A3' der zentralen bzw. redundanten zentralen Baugruppe ZBG1,ZBG1' verbunden. Der erste und zweite Ausgang A1',A2' der peripheren redundanten Baugruppe PBG1' ist auf einen ersten Eingang E1' der redundanten zentralen Baugruppe ZBG' bzw. auf einen ersten Eingang E1 der zentralen Baugruppe ZBG1 geschaltet. Der dritte Ausgang A3' der redundanten zentralen Baugruppe ZBG1' ist zusätzlich auf einen dritten Eingang E3 der peripheren Baugruppe PBG1 geführt. Desweiteren ist der dritte Ausgang A3 der zentralen Baugruppe ZBG1 zusätzlich auf den dritten Eingang E3' der redundanten peripheren Baugruppe PBG1' geführt. Ein mit den erfindungsgemäßen zeitmulitplexorientierten Schnittstellen ISI durchführbare Konzeption besteht nun darin, daß alle Schaltmittel S1, U1 zur Redundanzschaltung sowohl der peripheren als auch zentralen Baugruppen PBG1,PBG1',ZBG1,ZBG1' in den peripheren Baugruppen bzw. redundanten peripheren Baugruppen PBG1,PBG1' realisiert sind.

Der Redundanzumschaltung der zentralen Baugruppe liegen folgende Prinzipien zugrunde:
- Jede zentrale Baugruppe ZBG1,ZBG1' sendet sowohl auf die periphere als auch auf die redundante periphere Baugruppen PBG1,PBG1' die zu sendenden Informationsströme is aus.
- Die Auswahl der aktiven zentralen Baugruppe ZBG1,ZBG1' erfolgt in den mit ihr verbundenen peripheren Baugruppen bzw. redundanten peripheren Baugruppen PBG1,PBG1' durch jeweils einen Umschalter U1 U1', durch den jeweils die gleiche aktive zentrale Baugruppe ZBG1,ZBG1' ausgewählt wird. Die Umschaltung alle peripheren Baugruppen PBG1, PBG1'.. von einer zentralen Baugruppe ZBG1,ZBG1' auf die andere erfolgt synchron nach einer entsprechenden sicherheitstechnischen Information sbi bzw. Meldung über die beiden Zeitschlitze ZS160, ZS161. Hierbei werden die zentralen Baugruppen ZBG1,ZBG1' durch die Umschalter U1,U1' und die peripheren Baugruppen PBG1,PBG1' durch die Schalter S1,S1' unabhängig voneinander umgeschaltet- in FIG 4 durch mit a und b bezeichnete, strichpunktierte Linien angedeutet.

Der Redundanzumschaltung der peripheren Baugruppen PBG1,PBG1' liegt folgendes Prinzip zugrunde:
- Die aktuell aktive periphere Baugruppe PBG1,PBG1' sendet auf beide zentralen Baugruppen ZBG1, ZBG1' die Informationsströme is aus.
- Die im Standby-Modus bzw. Betriebsbereitschaft geschaltete periphere Baugruppe PBG1, PBG1' empfängt gleichzeitig die Informationsströme is von der aktiven zentralen Baugruppe ZBG1,ZBG1'.
- Die in den Standby-Modus geschaltete periphere Baugruppe PBG1,PBG1' sendet keine Informationsströme is aus.
- Im Falle eines Ausfalls der jeweiligen aktiven peripheren Baugruppe PBG1,PBG1' wird mit Hilfe des Schalters S1,S1' auf die sich im Standby-Modus befindliche periphere Baugruppe PBG1,PBG1' umgeschaltet.
- Es wird nur die vom Ausfall betroffene periphere Baugruppe PBG1,PBG1' umgeschaltet.
- Zwischen den peripheren und den redundanten peripheren Baugruppen PBG1,PBG1' sind Informationsleitungen geschaltet, um den Umschaltvorgang störungsfrei zu bewerkstelligen - in FIG 4 durch strichpunktierte Linien angedeutet.

Mit Hilfe der in den zeitmultiplexorientierten Schnittstellen ISI enthaltenen Zeitschlitzen ZS160, 161 können die jeweiligen betriebstechnischen bzw. sicherheitstechnischen Informationen sbi für die jeweiligen Umschaltvorgänge bzw. für die Anzeige des Ausfalls der jeweiligen zentralen oder dezentralen Baugruppe PBG1,PBG1',ZBG1,ZBG1' übermittelt werden. Besonders vorteilhaft ist bei der erfindungsgemäßen zeitmultiplexorientierten Schnittstelle ISI für jede periphere Baugruppe bzw. redundante periphere Baugruppe PBG1,PBG1' jeweils ein eigener Zeitschlitz ZS für die Übermittlung der jeweiligen sicherheitstechnischen bzw. betriebstechnischen Informationen sbi vorgesehen. Hierdurch ist eine Trennung des Informationsflusses erreicht, wodurch eine gegenseitige Beeinflussung bzw. Störung durch fehlinterpretierte Informationen minimiert ist.

Die erfindungsgemäße zeitmultiplexorientierte Schnittstelle ISI ist in beliebigen Kommunikationseinrichtungen, die in zentrale und dezentrale Komponenten bzw. redundante zentrale und dezentrale Komponenten strukturiert sind, einsetztbar, wobei an den empfangsseitigen und sendeseitigen Verbindungspunkten jeweils eine zeitmultiplexorientierte Schnittstelle ISI vorgesehen ist.

## Patentansprüche

1. Zeitmultiplexorientierte Schnittstelle (ISI) zwischen zentralen und dezentralen Komponenten (PBG1,PBG1',ZBG1,ZBG1') von Kommunikationseinrichtungen (KE),
- mit in Übertragungsrahmen (FR) angeordneten Zeitschlitzen (ZS1..ZS162) zur seriellen Übermittlung von
-- Nutzinformationen (ni),
-- vermittlungstechnischen Informationen (cp),
-- den Ausfall von zentralen Komponenten anzeigenden sicherheits- und betriebstechnischen Informationen (sbi) an die dezentralen Komponenten,
-- von Programmen (PR) im Sinne eines Ladens von Komponenten (PBG1,PBG1',ZBG1,ZBG1') der Kommunikationseinrichtung (KE), und
-- von Rahmentakt- und/oder Überrahmentaktinformationen (rt,ürt).

2. Zeitmultiplexorientierte Schnittstelle nach Anspruch 1,
**dadurch gekennzeichnet,**
**daß** ein Zeitschlitz (ZS) durch Datenbits (DB), zumindest ein Signalisierungsbit (cas) und zumindest ein Paritybit (P) gebildet ist.

3. Zeitmultiplexorientierte Schnittstelle nach Anspruch 2,
**dadurch gekennzeichnet,**
**daß** acht Datenbits (D1..8), ein Signalisierungsbit (cas) und ein Paritybit (P) vorgesehen sind.

4. Zeitmultiplexorientierte Schnittstelle nach Anspruch 2 oder 3, **dadurch gekennzeichnet,**
**daß** die in den Datenbits (D1..8) zu übermittelnden Nutzinformationen (ni) NZR-codiert und ein ungerades Paritybit (P) gebildet wird, und daß aus den empfangenen Nutzinformationen (ni) und Paritybits (P) der Bittakt (BT) für die bitgemäße Verarbeitung der empfangenen Informationen (ni,cp,sbi,PR,rt, ürt) abgeleitet wird.

5. Zeitmultiplexorientierte Schnittstelle nach einem der Ansprüche 1 bis 3, **dadurch gekennzeichnet,**
- **daß** ein Zeitschlitz (ZS 159) für die Übermittlung von vermittlungstechnischen Informationen (cp)
- zwei Zeitschlitze (ZS 160,161) für die Übermittlung von sicherheits- und betriebstechnischen Informationen (sbi),
- vier Zeitschlitze (ZS 155..158) für das Laden von Programmen (PR),
- 154 Zeitschlitze (ZS 1..154) für die Übermittlung von zeitmultiplexorientierten Nutzinformationen (ni) und
- ein Zeitschlitz (ZS 162) für die Übermittlung von Rahmentakt- und Überrahmentaktinformationen (rt,ürt) vorgesehen ist.

6. Zeitmultiplexorientierte Schnittstelle nach einem der vorhergehenden Ansprüche, **dadurch gekennzeichnet,**
**daß** die zeitmultiplexorientierte Schnittstelle (PCI) bidirektional mit jeweils symmetrischer 2-Draht-Informationsübertragung realisiert ist.

7. Zeitmultiplexorientierte Schnittstelle nach einem der vorhergehenden Ansprüche, **dadurch gekennzeichnet,**
**daß** die beiden Zeitschlitze (ZS 160,161) für die Übermittlung von sicherheits- und betriebstechnischen Informationen (sbi) für redundante Komponenten (PBG1',ZBG1') der Kommunikationseinrichtung (KE) vorgesehen sind.

8. Kommunikationsanordnung mit zentralen und dezentralen Komponenten mit jeweils einer zeitmultiplexorientierten Schnittstelle,
- bei der bei redundanten zentralen und dezentralen Komponenten (PBG1,PBG1',ZBG1,ZBG1') jede dezentrale Komponente (PBG1,PBG1') bidirektional mit jeder zentralen Komponente (ZBG1,ZBG1') über zeitmultiplexorientierte Schnittstellen (PCI) verbunden ist, wobei jeder dezentralen Komponente (PBG1,PBG1') ein Zeitschlitz (ZS 160,161) zur Übermittlung von sicherheits- und betriebstechnischen Informationen (sbi) zugeordnet ist,
- mit in den zentralen Komponenten (ZBG1,ZBG1') angeordneten Mitteln zum Erkennen des Ausfalls von zentralen Komponenten (ZBG1,ZBG1') und zum Übermitteln einer den Ausfall anzeigenden sicherheitstechnischen Information (sbi) über den zugeordneten Zeitschlitz (ZS160,ZS161) zur Übermittlung von sichterheits- oder betriebstechnischen Informationenen (sbi) an die mit ihr verbundenen dezentralen Komponenten (PBG1,PBG1'),
- mit in den dezentralen Komponenten (PBG1,PBG1') angeordneten Mitteln zum Erkennen des Ausfalls der jeweiligen dezentralen Komponente (PBG1,PBG1'),
- mit in den dezentralen Komponenten (PBG1,PBG1') angeordneten, untereinander verbundenen Mitteln (S1,S1',U1,U1') zum Umschalten auf die jeweils redundante Komponente (PBG1, PBG1',ZBG1,ZBG1') im Falle eines Ausfalls einer zentralen oder dezentralen Komponente (PBG1,PBG1',ZBG1,ZBG1').

9. Kommuniaktionsanordnung nach Anspruch 7, **dadurch gekennzeichnet,**
**daß** in jeder dezentralen Komponente (PBG1,PBG1')
- ein Umschalter (U1,U1' zur Umschaltung auf eine von zwei in Übermittlungsrichtung zur dezentralen Komponente (PBG1, PBG1') wirkenden zeitmultiplexorientierten Schnittstellen (ISI) und
- ein Schalter (S1,S1') zur Wirksamschaltung der in Übermittlungsrichtung zur zentralen Komponente (ZBG1,ZBG1') wirkenden, zeitmultiplexorientierten Schnittstelle (ISI) vorgesehen ist, wobei bei einem Wirksamschalten einer zeitmultiplexorientierten Schnittstelle (ISI) die zeitmultiplexorientierte Schnittstelle (ISI) der redundanten, zeitmultiplexorientierten Schnittstelle (ISI) unwirksam geschaltet wird.

## Claims

1. Time-division-multiplex-oriented interface (ISI) between central and decentralized components (PBG1, PBG1', ZBG1, ZBG1') of communication facilities (KE),
- with time slots (ZS1..ZS162) arranged in transmission frames (FR) for the serial communication of
-- user information (ni),
-- switching information (cp),
-- safety and operating information (sbi) indicating the failure of central components to the decentralized components,
-- of programs (PR) in the sense of loading components (PBG1, PBG1', ZBG1, ZBG1') of the communication facility (KE), and
-- of frame clock and/or multiframe clock information (rt, ürt).

2. Time-division-multiplex-oriented interface according to Claim 1, **characterized in that** a time slot (ZS) is formed by data bits (DB), at least one signalling bit (cas) and at least one parity bit (P).

3. Time-division-multiplex-oriented interface according to Claim 2, **characterized in that** eight data bits (D1..8), one signalling bit (cas) and one parity bit (P) are provided.

4. Time-division-multiplex-oriented interface according to Claim 2 or 3, **characterized in that** the user information (ni) to be communicated in the data bits (D1..8) is NZR coded and an odd parity bit (P) is formed, and that from the received user information (ni) and parity bits (P), the bit clock (BT) for the bit-oriented processing of the received information (ni, cp, sbi, PR, rt, ürt) is derived.

5. Time-division-multiplex-oriented interface according to one of Claims 1 to 3, **characterized in that**
- one time slot (ZS 159) is provided for communicating switching information (cp),
- two time slots (ZS 160, 161) are provided for communicating safety and operating information (sbi),
- four time slots (ZS 155..158) are provided for loading programs (PR),
- 154 time slots (ZS 1..154) are provided for communicating time-division-multiplex-oriented user information (ni) and
- one time slot (ZS 162) is provided for communicating frame clock and multiframe clock information (rt, ürt).

6. Time-division-multiplex-oriented interface according to one of the preceding claims, **characterized in that** the time-division-multiplex-oriented interface (PCI) is implemented bidirectionally with in each case balanced 2-wire information transmission.

7. Time-division-multiplex-oriented interface according to one of the preceding claims, **characterized in that** the two time slots (ZS 160, 161) are provided for communicating safety and operating information (sbi) for redundant components (PBG1', ZBG1') of the communication facility (KE).

8. Communication arrangement with central and decentralized components with in each case one time-division-multiplex-oriented interface,
- in which, in the case of redundant central and decentralized components (PBG1, PBG1', ZBG1, ZBG1'), each decentralized component (PBG1, PBG1') is connected bidirectionally to each central component (ZBG1, ZBG1') via time-division-multiplex-oriented interfaces (PCI), wherein to each decentralized component (PBG1, PBG1') one time slot (ZS 160, 161) is allocated for the communication of safety and operating information (sbi),
- comprising means, arranged in the central components (ZBG1, ZBG1'), for detecting the failure of central components (ZBG1, ZBG1') and for communicating a safety information item (sbi) indicating the failure via the associated time slot (ZS160, ZS161) for communicating safety or operating information (sbi) to the decentralized components (PBG1, PBG1') connected to it,
- comprising means, arranged in the decentralized components (PBG1, PBG1'), for detecting the failure of the respective decentralized component (PBG1, PBG1'),
- comprising interconnected means (S1, S1', U1, U1'), arranged in the decentralized components (PBG1, PBG1'), for switching to the respective redundant component (PBG1, PBG1', ZBG1, ZBG1') in the case of a failure of a central or decentralized component (PBG1, PBG1', ZBG1, ZBG1').

9. Communication arrangement according to Claim 7, **characterized in that** in each decentralized component (PBG1, PBG1'),
- a change-over switch (U1, U1' for switching to one of two time-division-multiplex-oriented interfaces (ISI) acting in the direction of communication to the decentralized component (PBG1, PBG1') and
- one switch (S1, S1') for activating the time-division-multiplex-oriented interface (ISI) acting in the direction of communication towards the central component (ZBG1, ZBG1') is provided, wherein in the case of an activation of a time-division-multiplex-oriented interface (ISI), the time-division-multiplex-oriented interface (ISI) of the redundant time-division-multiplex-oriented interface (ISI) is deactivated.

## Revendications

1. Interface (ISI) à multiplexage dans le temps entre des composants centraux et des composants décentralisés (PBG1, PBG1', ZBG1, ZBG1') de dispositifs de communication (KE),
- comprenant des créneaux temporels (ZS1 ... ZS162) disposés dans des trames de transmission (FR) pour la transmission sérielle
- - d'informations utiles (ni)
- - d'informations relatives à la technique de commutation (cp)
- - d'informations (sbi) relatives à la technique de sécurité et de service et indiquant la défaillance de composants centraux aux composants décentralisés,
- - de programmes (PR) au sens d'un chargement de composants (PBG1, PBG1', ZBG1, ZBG1') du dispositif de communication (KE), et
- - d'informations de rythme de trame et/ou d'informations de rythme de supertrame (rt, ürt).

2. Interface à multiplexage dans le temps selon la revendication 1, **caractérisée en ce**
**qu'**un créneau temporel (ZS) est formé par des bits de données (DB), au moins un bit de signalisation (cas) et au moins un bit de parité (P).

3. Interface à multiplexage dans le temps selon la revendication 2, **caractérisée en ce**
**que** huit bits de données (D1 ...8), un bit de signalisation (cas) et un bit de parité (P) sont prévus.

4. Interface à multiplexage dans le temps selon la revendication 2 ou 3, **caractérisée en ce**
**que** les informations utiles (ni) à transmettre dans les bits de données (D1 ...8) sont codées NZR et en ce qu'un bit de parité impair (P) est formé, et en ce que le rythme de bits (BT) pour le traitement binaire des informations reçues (ni, cp, sbi, PR, rt, ürt) est dérivé à partir des informations utiles reçues (ni) et des bits de parité (P).

5. Interface à multiplexage dans le temps selon l'une quelconque des revendications 1 à 3, **caractérisée en ce**
- **qu'**un créneau temporel (ZS 159) est prévu pour la transmission d'informations (cp) relatives à la technique de commutation,
- en ce que deux créneaux temporels (ZS 160, 161) sont prévus pour la transmission d'informations (sbi) relatives à la technique de sécurité et de service,
- en ce que quatre créneaux temporels (ZS 155 ... 158) sont prévus pour le chargement de programmes (PR),
- en ce que 154 créneaux temporels (ZS 1 ... 154) sont prévus pour la transmission d'informations utiles (ni) à multiplexage dans le temps et
- en ce qu'un créneau temporel (ZS 162) est prévu pour la transmission d'informations de rythme de trame et d'informations de rythme de supertrame (rt, ürt).

6. Interface à multiplexage dans le temps selon l'une quelconque des revendications précédentes, **caractérisée en ce que** l'interface (PCI) à multiplexage dans le temps est réalisée de manière bidirectionnelle avec respectivement transmission d'informations symétrique à 2 fils.

7. Interface à multiplexage dans le temps selon l'une quelconque des revendications précédentes, **caractérisée en ce que** les deux créneaux temporels (ZS 160, 161) sont prévus pour la transmission d'informations (sbi) relatives à la technique de sécurité et de service pour des composants redondants (PBG1', ZBG1') du dispositif de communication (KE).

8. Dispositif de communication comprenant des composants centraux et décentralisés dotés respectivement d'une interface à multiplexage dans le temps,
- dans lequel, dans des composants centraux redondants et des composants décentralisés redondants (PBG1, PBG1', ZBG1, ZBG1'), chaque composant décentralisé (PBG1, PBG1') est raccordé de manière bidirectionnelle à chaque composant central (ZBG1, ZBG1') par l'intermédiaire d'interfaces à multiplexage dans le temps (PCI), un créneau temporel (ZS 160, 161) étant affecté à chaque composant décentralisé (PBG1, PBG1') pour la transmission d'informations (sbi) relatives à la technique de sécurité et de service,
- comprenant des moyens disposés dans les composants centraux (ZBG1, ZBG1'), permettant de reconnaître la défaillance de composants centraux (ZBG1, ZBG1') et de transmettre aux composants décentralisés (PBG1, PBG1') raccordés aux moyens une information (sbi), relative à la technique de sécurité et indiquant la défaillance, par l'intermédiaire du créneau temporel affecté (ZS160, ZS161),
- comprenant des moyens disposés dans les composants décentralisés (PBF1, PBG1'), permettant de reconnaître la défaillance du composant décentralisé respectif (PBG1, PBG1'),
- comprenant des moyens (S1, S1', U1, U1') disposés dans les composants décentralisés (PBG1, PBG1') et raccordés entre eux, permettant de commuter sur les composants respectivement redondants (PBG1, PBG1', ZBG1, ZBG1') dans le cas d'une défaillance d'un composant central ou d'un composant décentralisé (PBG1, PBG1', ZBG1, ZBG1').

9. Dispositif de communication selon la revendication 7,
**caractérisé en ce**
**que** dans chaque composant décentralisé (PBG1, PBG1'),
- un commutateur (U1, U1') est prévu pour la commutation sur une de deux interfaces (ISI) à multiplexage dans le temps agissant dans le sens de transmission vers le composant décentralisé (PBG1, PBG1') et
- un commutateur (S1, S1') pour la commutation active de l'interface (ISI) à multiplexage dans le temps agissant dans le sens de transmission vers le composant central (ZBG1, ZBG1'), l'interface (ISI) à multiplexage dans le temps de l'interface (ISI) redondante à multiplexage dans le temps étant commutée de manière inactive lors d'une commutation active d'une interface (ISI) à multiplexage dans le temps.
